# EUROPÄISCHE PATENTSCHRIFT

(11) **EP 1 369 071 B1**
(45) Veröffentlichungstag und Bekanntmachung des Hinweises auf die Patenterteilung: **11.05.2005**
(21) Anmeldenummer: 03011095.1
(22) Anmeldetag: 21.05.2003
(51) Int. Cl.: A47J 36/06, A47J 36/08, A47J 36/12

(54) **Deckel für ein Gargerät**
Lid for a cooking apparatus
Couvercle pour un appareil de cuisson

(30) Priorität: 03.06.2002 DE 10224465
(43) Veröffentlichungstag der Anmeldung: 10.12.2003
(73) Patentinhaber: FRIMA SA, 68271 Wittenheim Cedex (FR); Rational AG, 86899 Landsberg/Lech (DE)
(72) Erfinder: Wagner, Stefan, 68127 Oberhergheim (FR); Michineau, Serge, 68190 Ensisheim (FR)
(74) Vertreter: Weber-Bruls, Dorothée, Dr.

(56) Entgegenhaltungen:
- EP-A- 1 275 334
- DE-A- 19 653 279
- GB-A- 2 321 177
- US-A- 6 022 572

## Beschreibung

Die vorliegende Erfindung betrifft einen Deckel für ein Gargerät mit zumindest einem von dem Deckel zumindest teilweise verschließbaren ersten Garbehälter, insbesondere in Form eines Tiegels oder Bottichs, und zumindest einer Schwenkvorrichtung, über die der Deckel um eine im wesentlichen horizontal verlaufende Drehachse relativ zum Gargerät zwischen zumindest einer ersten, den ersten Garbehälter, insbesondere druckdicht, verschließenden Position und zumindest einer zweiten, den ersten Garbehälter öffnenden Position, insbesondere stufenlos, verschwenkbar ist sowie ein Verfahren zum Betrieb eines Gargeräts, insbesondere umfassend einen erfindungsgemäßen Deckel.

Aus dem Stand der Technik sind verschiedene Deckel für Gargeräte bekannt. So offenbart beispielsweise die DE 696 08 858 T2 ein Scharnier für einen gattungsgemäßen Deckel bzw. Gehäusedeckel eines Kochgerätes, wie beispielsweise einer Friteuse. In diesem Scharnier ist für ein automatisches Anheben eines Deckels eine Feder vorgesehen. Die Enden dieser Feder laufen während eines Öffnens des Deckels durch eine in der Oberfläche des Scharniers ausgebildete Nut, die eine Bremsrampe bildet, so daß die Öffnungsbewegung des Deckels zum Ende hin gebremst werden kann.

Ein weiterer gattungsgemäßer Deckel ist aus der DE 100 05 003 A1, die ein Garsystem mit Rohrkonstruktion offenbart, bekannt. Dort ist vorgesehen, daß ein Gargutbehälter mittels des Deckels verschlossen werden kann, indem der Deckel an einem Drehlager um eine horizontale Achse schwenkbar ist. Um das bei einer Drehung des Deckels um die Drehachse aufgrund der Schwerkraft desselben wirkende Drehmoment zu verringern und das Hochschwenken des Deckels für eine Bedienperson zu erleichtern, ist innerhalb des Drehlagers eine Feder vorgesehen, so daß das effektive Gewicht des Deckels durch die Federkraft verringert wird.

In der DE 196 53 279 A1 ist als Stand der Technik ein weiterer Deckel beschrieben. Dieser Deckel dient dem Abdecken einer Öffnung einer Garkammer, wobei vorgesehen ist, daß ein Garbehälter aus der Garkammer manuell oder mittels einer mechanischen Hebevorrichtung herausgehoben werden kann, ohne daß jedoch weitere Einzelheiten dieser Hebevorrichtung offenbart werden. Der der Neuentwicklung der DE 196 53 279 A1 zugrundeliegende Deckel ist dagegen senkrecht zur Ebene des Öffnungsrands höhenverstellbar gehalten. An der Unterseite des Deckels kann ein Garbehälter befestigt werden, der durch ein Heben und Senken des Deckels aus der Garkammer heraus- bzw. in diese hineinbewegt werden kann. Durch eine zusätzliche Verschwenkmöglichkeit des Deckels parallel zur Ebene der Öffnung der Garkammer soll ein leichteres Handling des Garbehälters erreichbar sein. Nachteilig bei dem in der DE 196 53 279 A1 offenbarten Deckel sowie dem darin offenbarten Verfahren ist jedoch, daß eine Manipulation eines in dem Garbehälter befindlichen Garguts, insbesondere wenn der Garbehälter während eines Garprozesses in die Garkammer abgesenkt ist, nicht möglich bzw. zumindest erschwert ist. Ferner ist das Gargerät konstruktiv sehr aufwendig und damit sowohl kostenintensiv als auch störanfällig und weist aufgrund der vorgesehenen Schwenkbarkeit des Deckels einen erhöhten Platzbedarf auf.

Ferner sind aus der US 6,022,572 sowie DE 689 15 992 T2 Deckel für Gargeräte bekannt, die im wesentlichen eine horizontale Position aufweisen und an dessen Unterseite eine Vorrichtung zur Aufnahme zumindest eines Garbehälters vorgesehen ist. Der Garbehälter kann dabei durch ein Senken bzw. Heben des Deckels in vertikale Richtung in einen Bottich abgesenkt bzw. aus diesem herausbewegt werden. Bei dem Deckel der DE 689 15 992 T2 ist vorgesehen, daß ein Teil des Deckels über ein Scharnier so gelagert ist, daß der Deckel ausschließlich für Reinigungszwecke aus einer horizontalen in eine vertikale Position verschwenkt werden kann. Diese Gargeräte weisen damit jedoch ebenfalls die zuvor genannten Nachteile auf. Der Deckel der US 6,022,572 ist zur Erfassung des Gewichts eines Garbehälters und/oder Garguts verschwenkbar gelagert.

Der Erfindung liegt somit die Aufgabe zugrunde, den gattungsgemäßen Deckel derart weiterzuentwickeln, daß die Nachteile des Stands der Technik überwunden werden, insbesondere eine konstruktiv einfache Hebe-/Senkvorrichtung für einen Garkorb geliefert, eine Manipulation eines in dem Garkorb angeordneten Garguts während eines Garprozess ermöglicht und eine maximale Sicherheit erreicht wird. Ferner soll ein gegenüber dem Stand der Technik verbessertes Verfahren zum Betreiben eines Gargeräts, insbesondere umfassend einen erfindungsgemäßen Deckel, geliefert werden.

Die den Deckel betreffende Aufgabe wird gelöst durch zumindest eine Hebe/Senkvorrichtung für zumindest einen zweiten Gärbehälter, insbesondere in Form eines Garkorbs, über die der zweite Garbehälter aus bzw. in den ersten Garbehälter hebbar bzw. senkbar ist, wobei die Hebe-/Senkvorrichtung mit der Schwenkvorrichtung derart in Wirkverbindung steht, daß der zweite Garbehälter durch Verschwenken des Deckels aus zumindest einer dritten Position, in welcher der zweite Garbehälter zumindest teilweise außerhalb und oberhalb des ersten Garbehälters und/oder eines im ersten Garbehälter einfüllbaren Garmediums angeordnet ist, in zumindest eine vierte Position, in welcher der zweite Garbehälter im wesentlichen in dem ersten Garbehälter und/oder dem Garmedium angeordnet ist, bewegbar ist.

Ein vorteilhafter erfindungsgemäßer Deckel weist ferner zumindest eine, insbesondere mechanische, elektromechanische, hydraulische, elektrohydraulische, pneumatische und/oder elektropneumatische, Antriebsvorrichtung, die vorzugsweise von der Schwenkvorrichtung und der Hebe-/Senkvorrichtung umfaßt ist, auf.

Weiterhin kann zumindest eine Gegenkrafteinrichtung, insbesondere in Form einer Schrauben-, einer Spiral- und/oder Torsionsfeder und/oder umfassend zumindest ein Gegengewicht, zur Erleichterung des, insbesondere manuellen, Verschwenkens des Deckels zwischen der ersten und zweiten Position, wobei die Gegenkrafteinrichtung vorzugsweise in Wirkverbindung mit der Antriebsvorrichtung steht, vorgesehen sein.

Bei den beiden vorgenannten Alternativen kann vorgesehen sein, daß die Antriebsvorrichtung zumindest eine Antriebseinheit und ein, vorzugsweise die Drehachse des Deckels mit der Antriebseinheit verbindendes, Übertragungselement umfaßt, das Übertragungselement zumindest ein erstes Verbindungselement, vorzugsweise in Form eines Hubzylinders und/oder einer ersten Federeinrichtung, insbesondere einer Druckgasfeder und/oder Schraubenfeder, umfaßt, und der Deckel, vorzugsweise gegen-die Kraft des Verbindungselements, manuell ohne Betätigung der Antriebseinheit, insbesondere in die erste Position, verschwenkbar ist.

Erfindungsgemäß ist dabei bevorzugt, daß der Deckel in zumindest einer zwischen der ersten und zweiten Position liegenden Position, insbesondere in der dritten und/oder vierten Position, arretierbar ist, vorzugsweise mittels der Antriebsvorrichtung.

Dabei kann erfindungsgemäß vorgesehen sein, daß das Übertragungselement, insbesondere das erste Verbindungselement, zum Arretieren des Deckels zumindest einen, insbesondere mechanischen, Anschlag aufweist.

Weiterentwicklungen der Erfindung können auch dadurch gekennzeichnet sein, daß die Hebe-/Senkvorrichtung zumindest eine mit dem zweiten Garbehälter in Wirkverbindung stehende Tragevorrichtung, vorzugsweise in Form eines Gestänges, umfaßt, die Tragevorrichtung lösbar mit zumindest einem zweiten Verbindungselement, vorzugsweise in Form eines am Dekkel angeordneten Hakens, verbindbar ist, und die Verbindung zwischen dem Deckel und dem zweiten Garbehälter, insbesondere bei einem Verschwenken des Deckels in die erste Position, vorzugsweise automatisch, lösbar ist.

Dabei kann eine Ausführungsform des erfindungsgemäßen Deckels dadurch gekennzeichnet sein, daß das Gestänge bei bzw. nach einem Lösen der Verbindung zwischen dem Deckel und dem zweiten Garbehälter relativ zum Deckel, vorzugsweise mittels einer Rollvorrichtung, bewegbar ist.

Bei den beiden vorgenannten Alternativen ist bevorzugt zumindest eine zweite Federeinrichtung in Wirkverbindung mit dem zweiten Garbehälter und der Tragevorrichtung, insbesondere zur Erleichterung des Verschwenkens aus der ersten Position heraus und/oder zum Auslenken des Gestänges, vorgesehen.

Erfindungsgemäß sind weiterhin Ausführungsformen bevorzugt, die zumindest eine Sicherheitsvorrichtung, über die der Deckel bei der Durchführung eines Druckgarprozeßes innerhalb des ersten Garbehälters erst nach Ablassen des Drucks aus dem ersten Garbehälter aus der ersten Position heraus verschwenkbar ist, vorsehen.

Mit der Erfindung wird auch zumindest ein Sensor, insbesondere in Form eines Gewichtssensors, Rauchsensors, Drucksensors, Tempartursensors und/oder Positionssensors, vorgeschlagen.

Insbesondere kann eine Ein- und/oder Ausgabeeinheit, insbesondere umfassend zumindest einen Schalter, eine Anzeige, einen Lautsprecher und/oder ein Mikrophon, vorgesehen sein.

Schließlich wird erfindungsgemäß zumindest eine Steuer- und/oder Regeleinrichtung in Verbindung mit der Schwenkvorrichtung, der Hebe-/Senkvorrichtung, der Antriebsvorrichtung, der Antriebseinheit, der Gegenkrafteinrichtung, dem Übertragungselement, dem Anschlag, der Tragevorrichtung, dem ersten und/öder zweiten Verbindungselement, der Sicherheitsvorrichtung, der ersten und/oder zweiten Federeinrichtung, der Rollvorrichtung, dem Sensor und/oder der Ein- und/oder Ausgabeeinheit vorgeschlagen.

Die das Verfahren betreffende Aufgabe wird dadurch gelöst, daß zumindest ein zweiter Garbehälter, insbesondere in Form eines Garkorbs, mittels einer vom Deckel umfaßten Hebe-/Senkvorrichtung in den ersten Garbehälter hinein- bzw. aus diesem herausbewegt wird, wobei der zweite Garbehälter durch Verschwenken des Deckels aus zumindest einer dritten Position, in welcher der zweite Garbehälter zumindest teilweise oberhalb und außerhalb des ersten Garbehälters und/oder eines im ersten Garbehälter eingefüllten Garmediums positionert wird, in zumindest eine vierte Position, in welcher der zweite Garbehälter im wesentlichen in dem ersten Garbehälter und/oder dem Garmedium positioniert wird.

Dabei kann vorgesehen sein, daß der Deckel mittels einer Antriebsvorrichtung, vorzugsweise automatisch, zumindest zwischen der dritten und vierten Position verschwenkt wird.

Mit der Erfindung wird auch vorgeschlagen, daß der Deckel zumindest in die erste Position manuell verschwenkt wird.

Eine Weiterentwicklung des erfindungsgemäßen Verfahrens kann dadurch gekennzeichnet sein, daß die Verbindung zwischen dem Deckel und dem zweiten Garbehälter gelöst werden kann, insbesondere beim Verschwenken in die erste Position.

Vorteilhafte Ausführungsformen des erfindungsgemäßen Verfahrens können dadurch ausgezeichnet sein, daß der Deckel gesteuert und/oder geregelt bewegt wird in Abhängigkeit von dem Garmedium im ersten Garbehälter, einem Gargut im zweiten Garbehälter, einem Garverfahren und/oder einem Reinigungsverfahren.

Dabei kann vorteilhafterweise vorgesehen sein, daß die Steuerung und/oder Regelung und/oder eine Diagnose über einen Datentransfer, insbesondere umfassend das Internet, durchgeführt wird.

Schließlich wird erfindungsgemäß auch vorgeschlagen, daß der Deckel mit einem Benutzer kommuniziert über eine Ein- und/oder Ausgabeeinheit.

Ein erfindungsgemäßer Deckel für ein Gargerät ist vorteilhafterweise so ausgeführt, daß eine konstruktiv einfache Hebe-/Senkvorrichtung realisiert wird, die insbesondere an bereits vorhandene Deckel eines Gargeräts angepaßt bzw. in diese integriert werden kann. Ferner ermöglicht es der erfindungsgemäße Deckel sowie das erfindungsgemäße Verfahren, daß ein Gargut, das sich in einem Garkorb befindet, der über die Hebe-/Senkvorrichtung in einen Garbehälter abgesenkt bzw. aus diesem herausgehoben werden kann, und/oder ein Garmedium im Garbehälter stets manipuliert, beispielsweise umgerührt, gewendet, nachgefüllt oder dergleichen, werden kann bzw. können. Insbesondere kann vorgesehen sein, daß ein Heben und Senken des Garkorbs über eine Antriebsvorrichtung erfolgt und somit automatisiert werden kann. Dabei kann von einem Bediener der zeitliche Beginn bzw. die Zeitdauer eines Garprozesses vorgegeben und dieser dann automatisch durch ein Senken bzw. Heben des Garkorbs gesteuert werden. Vor allem eine lösbare Verbindung zumindest eines an dem Deckel angeordneten Teils der Hebe-/Senkvorrichtung mit dem Rest der Hebe-/Senkvorrichtung ermöglicht es, daß ein manuelles Verschließen des Deckels auch bei Verwendung eines Garkorbs ermöglicht wird. Dies ermöglicht es einerseits, einen Druckgarprozess unter Verwendung eines Garkorbs bei Nutzung der Hebe-/Senkvorrichtung durchzuführen, und andererseits dient dieses Merkmal einer erhöhten Sicherheit, da ein manuelles Verschließen des Deckels, insbesondere im Falle einer Überhitzung des Garmediums im ersten Garbehälter ermöglicht wird. Ein derartiges Verschließen ist im wesentlichen ungehindert möglich, und es wird ferner eine Zerstörung bzw. Überbeanspruchung einer Tragevorrichtung der Hebe- bzw. Senkvorrichtung vermieden.

Weitere Merkmale und Vorteile der Erfindung ergeben sich aus der nachstehenden Beschreibung, in der bevorzugte Ausführungsformen der Erfindung beispielhaft anhand schematischer Zeichnungen im Einzelnen erläutert sind. Dabei zeigt:
- Figur 1: eine Seitenschnittansicht eines Gargeräts mit einem erfindungsgemäßen Deckel im angehobenen Zustand eines Garkorbs;
- Figur 2: eine Seitenschnittansicht des Gargeräts der Figur 1 in einer abgesenkten Position des Garkorbs;
- Figur 3: eine Seitenschnittansicht des Gargeräts der Figuren 1 und 2 im geschlossenen Zustand des Deckels;
- Figur 4: eine Detailseitenansicht einer Antriebsvorrichtung einer anderen Ausführungsform des erfindungsgemäßen Deckels in angehobener Position eines Garkorbs;
- Figur 5: eine Detailseitenansicht der Antriebsvorrichtung der Figur 4 in abgesenkter Position des Garkorbs;
- Figur 6: eine Detailseitenansicht der Antriebsvorrichtung der Figuren 4 und 5 im geschlossenen Zustand des Deckels; und
- Figur 7: eine perspektivische Detailansicht eines Verbindungselements der Antriebsvorrichtung der Figuren 4 bis 6.

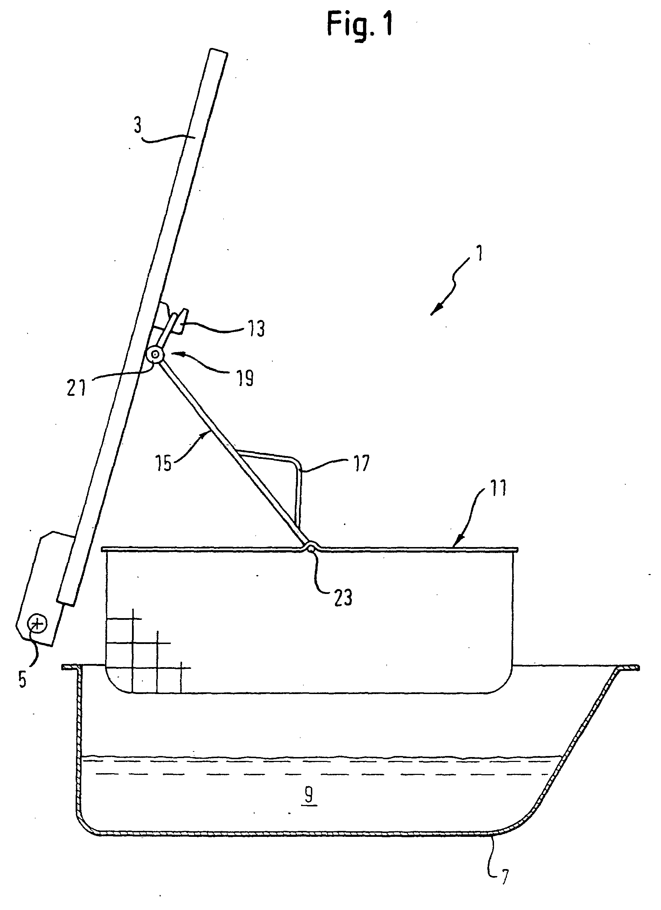

In Figur 1 ist ein Gargerät 1, das einen erfindungsgemäßen Deckel 3, der um eine im wesentlichen waagerecht verlaufende Drehachse 5 drehbar gelagert ist, dargestellt. Das Gargerät 1 umfaßt ferner einen ersten Garbehälter in Form eines Bottichs 7, in dem ein Garmedium 9, insbesondere in Form von Öl, vorhanden ist. Der erfindungsgemäße Deckel 3 zeichnet sich dadurch aus, daß ein zweiter Garbehälter in Form eines Garkorbs 11 durch eine Schwenkbewegung des Deckels 3 um die Drehachse 5 in den Bottich 7 herabgesenkt bzw. aus demselben herausgehoben werden kann. Dazu umfaßt der Deckel 3 eine Hebe-/Senkvorrichtung, die im wesentlichen einen am Deckel 3 angeordneten Haken 13 sowie eine Tragvorrichtung in Form eines Gestänges 15 umfaßt. Das Gestänge 15 umfaßt ferner zur Handhabung des Garkorbs 11 einen Griff 17, der es ermöglicht, das Gestänge 15 und damit den Garkorb 11 durch Einhängen in den Haken 13 am Deckel lösbar zu befestigen. Das Gestänge 15 weist ferner eine Biegung 19 auf, in deren Bereich eine Rolle 21 angeordnet ist. Diese Rolle 21 dient, wie später beschrieben wird, zur Führung des Gestänges 15, insbesondere wenn es zu einem manuellen Verschließen des Bottichs 7 mittels des Deckels 3 kommt. Der Garkorb 11 befindet sich in der in Figur 1 dargestellten Position des Deckels 3 teilweise oberhalb bzw. außerhalb des Bottichs 7 und insbesondere außerhalb des Garmediums 9. In dieser Position schließt der Deckel 3 vorteilhalfterweise einen Winkel von ungefähr 75° mit dem waagerechten Rand des Bottichs 7 ein.

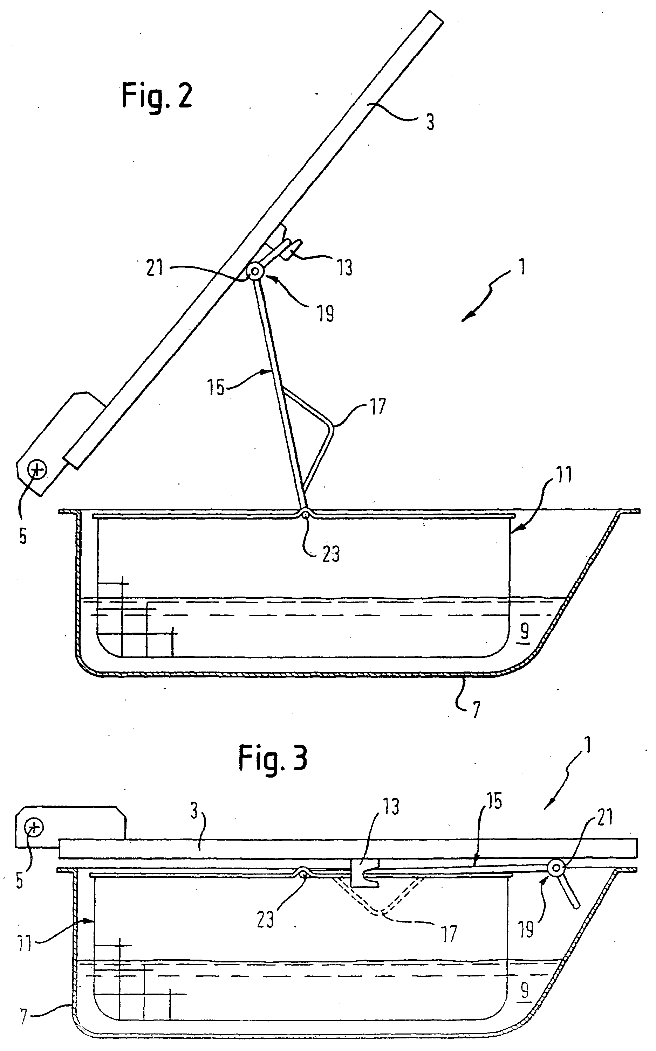

Bevor oder nachdem ein Benutzer das Gestänge 15 in dem Haken 13 eingehängt hat, kann in den Garkorb 11 zumindest ein Gargut, wie beispielsweise Pommes Frites, eingebracht werden. Insbesondere wenn sich das Garmedium 9 auf einer gewünschten Temperatur befindet, kann der Garkorb 11 dann in den Bottich 7 und damit in das Garmedium 9 abgesenkt werden. Dies erfolgt aus der in Figur 1 dargestellten Position durch ein Verschwenken des Deckels 3 um die Drehachse 5, in Richtung des Bottichs 7. Die somit erreichte abgesenkte Position des Garkorbs 11 ist in Figur 2 dargestellt. Die Bezugszeichen von Figur 2 entsprechen denjenigen in Figur 1. Vorteilhafterweise schließt der Deckel 3 in der Position von Figur 2 mit dem waagerechten Rand des Bottichs 7 einen Winkel von ungefähr 50° ein.

Um eine derartige Verschwenkbewegung des Deckels 3 im wesentlichen kraftneutral, das heißt ohne einen hohen Kraftaufwand für einen Benutzer, zu gestalten, weist die Drehachse 5 eine nicht dargestellte Gegenkrafteinrichtung auf. Diese dient dazu, daß einem aufgrund der Schwerkraft des Deckels 3, des Garkorbs 11 samt einem darin befindlichen Gargut und des Gestänges 15 erzeugten Drehmoment innerhalb der Drehachse 5 entgegengewirkt bzw. dasselbe kompensiert wird. Insbesondere bei Verwendung einer Gegenkrafteinrichtung in Form eines Federelements ermöglicht es die Gegenkrafteinrichtung verschiedene Arretierpositionen des Deckels 3, insbesondere die in den Figuren 1 und 2 dargestellten Positionen, bereitzustellen.

Befindet sich der Deckel 3 und damit der Garkorb 11 in der in Figur 2 dargestellten Position, kann ein Benutzer während des Garens des Garguts dieses manipulieren, insbesondere das Gargut im Garkorb 11 wenden bzw. umschichten, weitere Zutaten hinzufügen, das Garmedium 9 nachfüllen oder dergleichen. Somit ermöglicht es der erfindungsgemäße Deckel 3 erstmals, während eines Garprozesses, bei dem der Garkorb 11 in den Bottich 7 abgesenkt ist, einen Zugriff auf ein im Garkorb 11 angeordnetes Gargut und/oder ein Garmedium zu haben und dieses auch während eines Garpozesses beobachten sowie manipulieren zu können. Dies ist insbesondere beim Frittieren von großer Bedeutung, bei dem ein Benutzer insbesondere über einen visuellen Eindruck den Garzustand eines Garguts feststellt.

Weiterhin erfüllt der erfindungsgemäße Deckel 3 die notwendigen Sicherheitsanforderungen. Durch die lösbare Verbindung der Hebe-/Senkvorrichtung in Form des Hakens 13 und des Gestänges 15 sowie der konstruktiven Ausgestaltung des Gestänges 15 wird sichergestellt, daß der Bottich 7 zu jedem Zeitpunkt eines Garprozesses mittels des Deckels 3, durch ein einfaches Verschwenken desselben in die in Figur 3 dargestellte Position, verschlossen werden kann. Die Bezugszeichen der Figur 3 entsprechen denjenigen der Figuren 1 und 2. Ein Verschließen des Deckels 3 kann insbesondere dann notwendig werden, wenn es zu einer erhöhten Rauchentwicklung innerhalb des Bottichs 7 bzw. zu einem Überhitzen des Garmediums 9 kommt. In einem solchen Fall kann ein Benutzer den erfindungsgemäßen Deckel 3 einfach in die waagerechte Position verschwenken. Während dieser Bewegung löst sich das Gestänge 15 aus dem Haken 13 und wird mittels der Rolle 21 an der Oberfläche des Deckels 3 entlang geführt. Somit wird der Deckel 3 ohne einen erhöhten Kraftaufwand und ohne Überbeanspruchung des Gestänges 15 jederzeit schließbar.

Es kann ferner auch vorgesehen sein, daß ein Garprozess zunächst das Absenken des Garkorbs 11 in den Bottich 7 und einen anschließenden Druckgarprozess innerhalb des Bottichs 7 vorsieht. Für einen solchen Garprozess befestigt ein Benutzer zunächst den Garkorb 11 mittels des Gestänges 15 in der in Figur 1 ersichtlichen Form am Deckel 3. Insbesondere nach einem beispielsweise in Figur 2 dargestellten Absenken des Garkorbs 11 in den Bottich 7 und damit in das Garmedium 9 ist dann ein Verschließen des Deckels 3 möglich. Um ein luftdichtes Abschließen des Bottichs 7 mittels des Deckels 3 zu erzielen, sind im Randbereich des Deckels 3 bzw. des Bottichs 7 nicht dargestellte Dichtungsvorrichtungen vorgesehen.

In einem Lager 23 des Gestänges 15 am Garkorb 11 ist ferner eine nicht dargestellte Federeinrichtung vorgesehen. Diese Federeinrichtung ermöglicht es, daß bei einem Öffnen des Dekkels 3 durch einen Benutzer, beispielsweise nach einem Druckgarprozeß, das Gestänge 15 aus der in Figur 3 dargestellten, im wesentlichen horizontalen Position nach oben ausgelenkt und mittels der Rolle 21 an der Oberfläche des Deckels 3 geführt wird. Erreicht der Deckel 3 die in Figur 2 dargestellte Öffnungsstellung, findet das Gestänge 15 wiederum Eingriff in den Haken 13, so daß durch ein weiteres Verschwenken des Deckels 3 ein Heben des Garkorbs 11 aus dem Bottich 7 bzw. dem Garmedium 9, insbesondere in die in Figur 1 dargestellte Position, ermöglicht wird.

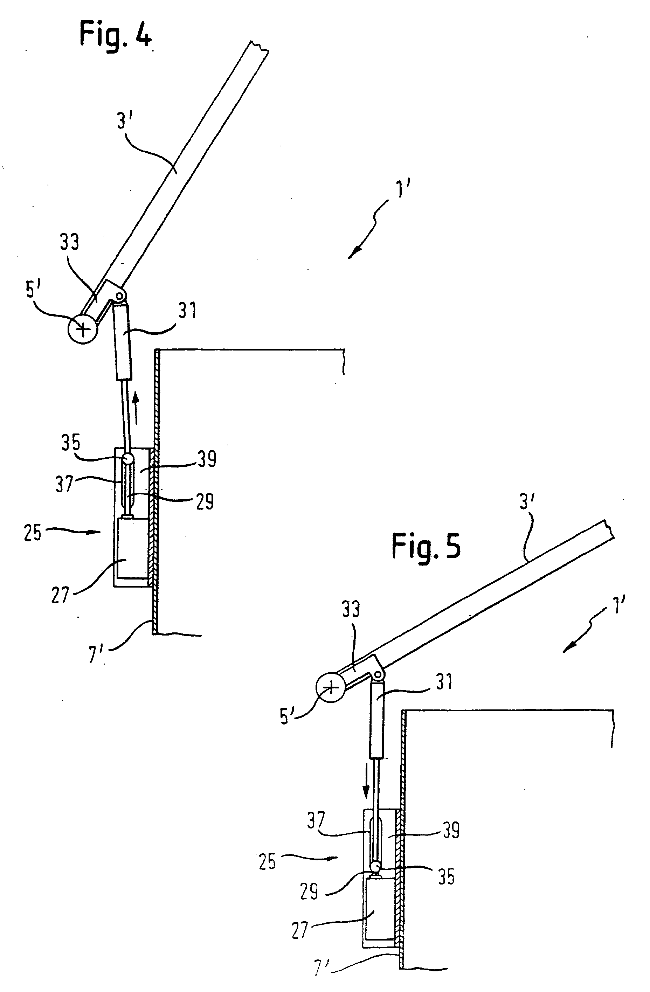

In einer weiteren vorteilhaften Ausführungsform gemäß der Erfindung erfolgt das Verschwenken eines Deckels und damit das Heben und Senken eines Garkorbs über eine elektromechanische Antriebsvorrichtung. Eine solche ist den in Figuren 4 bis 7 dargestellt. Das in Figur 4 ausschnittsweise dargestellte Gargerät 1' umfaßt einen Deckel 3', der zum Verschließen eines Bottichs 7' dient. Ferner umfaßt der Deckel 3' eine Hebe-/Senkvorrichtung für einen nicht dargestellten Garkorb, ähnlich wie bei der Ausführungsform der Figuren 1 bis 3. Die in Figur 4 dargestellte Position des Deckels 3' entspricht dabei im wesentlichen der in Figur 1 dargestellten Öffnungsposition des Deckels 3 des Gargeräts 1. In dieser Position befindet sich also ein an dem Deckel 3' befestigter Garkorb außerhalb des Bottichs 7'.

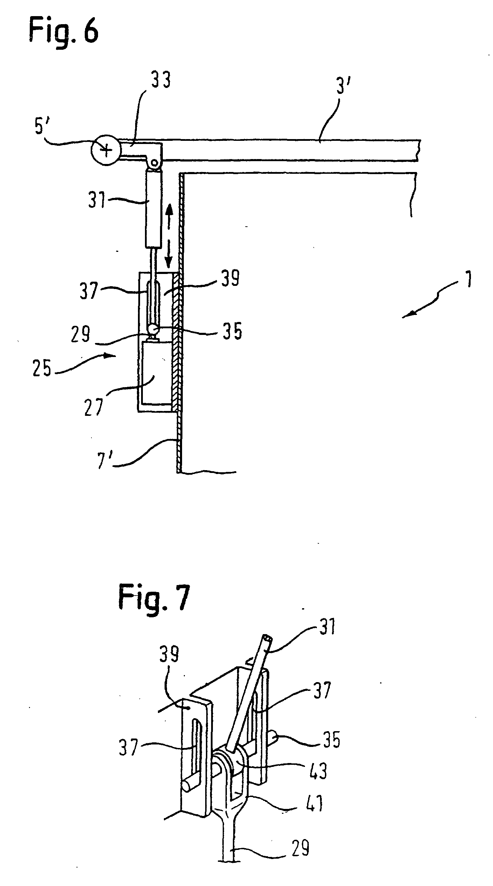

Wie Figur 4 ferner zu entnehmen ist, ist der Deckel 3' um eine Drehachse 5' drehbar gelagert. In dieser Ausführungsform wird jedoch zumindest teilweise ein Verschwenken des Deckels 3' über eine Antriebsvorrichtung 25 bewirkt. Diese Antriebsvorrichtung 25 umfaßt eine elektrische Antriebseinheit 27, mittels der eine Hubbewegung einer Antriebsstange 29 erzwingbar ist. Diese Hubbewegung der Antriebsstange 29 wird über ein Übertragungselement in Form einer Druckgasfeder 31 und einen Hebelarm 33 in eine Drehbewegung des Deckels 3' um die Drehachse 5' umgewandelt. Die Verbindung zwischen der Druckgasfeder 31 und der Antriebsstange 29 erfolgt über ein Gelenkelement, das in Figur 7 vergrößert dargestellt ist und einen Stift 35 aufweist, der in zumindest einer Nut 37 einer relativ zum Bottich 7' fixierten Eisenplatte 39 geführt ist. Durch die Länge der Nut 37 werden die Endpunkte der Hubbewegung der Antriebsstange 29 festgelegt. Vorteilhafterweise entsprechen diese Endpunkte gerade zwei Positionen des Deckels 3', wobei in der ersten Position der Garkorb sich außerhalb bzw. oberhalb des Bottichs 7' und damit außerhalb eines Garmediums befindet und in der zweiten Position der Garkorb in den Bottich 7' abgesenkt ist. Die zweite Position des Deckels 3' ist in Figur 5 dargestellt. Die Bezugszeichen entsprechen denjenigen der Figur 4. Wie aus Figur 5 ersichtlich, findet der Stift 35 in dieser Position Anschlag am unteren Ende der Nut 37 innerhalb der Eisenplatte 39. Wie aus Figur 7 ersichtlich, endet die Antriebsstange 29 in einer gabelförmigen Aufnahme 41 für ein Gelenkelement 43, welches mit der Druckgasfeder 31 verbunden ist. Das Gelenkelement 43 steht ferner in Wirkverbindung mit dem Stift 35, welcher beidseitig Eingriff in Nuten 37 findet, die in der U-förmigen Eisenplatte 39 ausgebildet sind.

In Figur 6 ist die Position des Deckels 3' dargestellt, in der der Bottich 7' durch den Deckel 3' verschlossen wird. Obwohl sich der Stift 35 in der in Figur 5 dargestellten Position des Dekkels 3' am unteren Anschlag der Nut 37 befindet, ist ein weiteres Verschwenken des Deckels 3' in die waagerechte Position möglich. Dies wird durch die Druckgasfeder 31 ermöglicht. Durch die Verwendung der Druckgasfeder 31 in dem Übertragungselement wird somit erreicht, daß ein Benutzer zu jedem Zeitpunkt unabhängig von der Antriebsvorrichtung 25 das Verschwenken des Deckels 3', manuell, vornehmen kann. Insbesondere ist dies also auch dann möglich, wenn es zu einer Überhitzung eines Garmediums innerhalb des Bottichs 7' kommt. Zu diesem Zweck verschwenkt der Benutzer den Deckel 3' gegen die Kraft der Druckgasfeder 31 in die in Figur 6 dargestellte Position und verriegelt den Deckel 3' in dieser Position über eine nicht dargestellte Verriegelungseinrichtung. Nach einem Öffnen der Verriegelungseinrichtung wird dann der Deckel 3' aufgrund der in der Druckgasfeder 31 gespeicherten Energie automatisch geöffnet. Durch die Druckgasfeder 31 wird ferner erreicht, daß diese Öffnungsbewegung kontrolliert abläuft und kein Aufspringen des Deckels 3' erfolgt. Ein solches Aufspringen würde eine erhöhte Gefahr für einen Benutzer darstellen, da er einerseits vom Deckel 3' getroffen werden könnte oder Garmedium aus dem Bottich 7' mit einem mittels der Hebe-/Senkvorrichtung an dem Deckel 3' befestigten Garkorb herausgespritzt werden könnte.

Somit ermöglicht es die Antriebsvorrichtung 25, daß ein automatisches Heben und Senken eines Garkorbs durch eine Verschwenkbewegung des Deckels 3' erreicht werden kann. Zu diesem Zweck ist die Antriebseinheit 27 mit einer nicht dargestellten Steuer- und Regeleinheit des Gargeräts 1' verbunden. Mittels nicht dargestellter Eingabevorrichtungen des Gargeräts 1' kann ein Benutzer beispielsweise den Beginn eines Garprozesses sowie eine Gardauer eingeben. Mittels der Steuer- und Regeleinheit wird dann ein Garmedium innerhalb des Bottichs 7' erhitzt und mittels der Antriebseinheit 27 ein Garkorb durch eine Verschwenkbewegung des Deckels 3' in den Bottich 7' abgesenkt. Nach Ablauf der vorgegebenen Gardauer wird dann der Garkorb mittels einer über die Antriebseinheit 27 hervorgerufene Schwenkbewegung des Deckels 3' aus dem Bottich 7' gehoben. In weiteren vorteilhaften Ausführungsformen kann vorgesehen sein, daß die Steuer- und Regeleinheit mit einem Gewichtssensor verbunden ist, der mit der Antriebsvorrichtung 25 in Wirkverbindung steht. Dieser Sensor mißt die Krafteinwirkung auf die Antriebsvorrichtung 25 und somit das Drehmoment um die Drehachse 5', wodurch eine Bestimmung des Gewichts eines in dem Garkorb befindlichen Garguts ermöglicht wird. Dieser ermittelte Wert kann dann zur Garprozeßsteuerung eingesetzt werden.

Die in der vorstehenden Beschreibung, in den Zeichnungen sowie in den Ansprüchen offenbarten Merkmale der Erfindung können sowohl einzeln als auch in jeder beliebigen Kombination zur Verwirklichung der Erfindung in ihren verschiedenen Ausführungsformen wesentlich sein.

### Bezugszeichenliste

- 1, 1': Gargerät
- 3, 3': Deckel
- 5, 5': Drehachse
- 7,7': Bottich
- 9: Garmedium
- 11: Garkorb
- 13: Haken
- 15: Gestänge
- 17: Griff
- 19: Biegung
- 21: Rolle
- 23: Lager
- 25: Antriebsvorrichtung
- 27: Antriebseinheit
- 29: Antriebsstange
- 31: Druckgasfeder
- 33: Hebelarm
- 35: Stift
- 37: Nut
- 39: Eisenplatte
- 41: Aufnahme
- 43: Gelenkelement

## Patentansprüche

1. Deckel (3, 3') für ein Gargerät (1, 1') mit zumindest einem von dem Deckel (3, 3') zumindest teilweise verschließbaren ersten Garbehälter, insbesondere in Form eines Tiegels oder Bottichs (7, 7'), und zumindest einer Schwenkvorrichtung, über die der Deckel (3, 3') um eine im wesentlichen horizontal verlaufende Drehachse (5, 5') relativ zum Gargerät (1, 1') zwischen zumindest einer ersten, den ersten Garbehälter (7, 7'), insbesondere druckdicht, verschließenden Position und zumindest einer zweiten, den ersten Garbehälter (7, 7') öffnenden Position, insbesondere stufenlos, verschwenkbar ist, **gekennzeichnet durch**
zumindest eine Hebe-/Senkvorrichtung (13, 15, 17, 19, 21, 23) für zumindest einen zweiten Garbehälter, insbesondere in Form eines Garkorbs (11), über die der zweite Garbehälter (11) aus bzw. in den ersten Garbehälter (7) hebbar bzw. senkbar ist, wobei die Hebe-/Senkvorrichtung (13, 15, 17, 19, 21, 23) mit der Schwenkvorrichtung derart in Wirkverbindung steht, daß der zweite Garbehälter (11) **durch** Verschwenken des Deckels (3) aus zumindest einer dritten Position, in welcher der zweite Garbehälter (11) zumindest teilweise außerhalb und oberhalb des ersten Garbehälters (7) und/oder eines im ersten Garbehälter (7) einfüllbaren Garmediums (9) angeordnet ist, in zumindest eine vierte Position, in welcher der zweite Garbehälter (11) im wesentlichen in dem ersten Garbehälter (7) und/oder dem Garmedium (9) angeordnet ist, bewegbar ist.

2. Deckel nach Anspruch 1, **gekennzeichnet durch**
zumindest eine, insbesondere mechanische, elektromechanische, hydraulische, elektrohydraulische, pneumatische und/oder elektropneumatische, Antriebsvorrichtung (25), die vorzugsweise von der Schwenkvorrichtung und der Hebe-/Senkvorrichtung umfaßt ist.

3. Deckel nach Anspruch 1 oder 2, **gekennzeichnet durch**
zumindest eine Gegenkrafteinrichtung, insbesondere in Form einer Schrauben-, einer Spiral- und/oder Torsionsfeder und/oder umfassend zumindest ein Gegengewicht, zur Erleichterung des, insbesondere manuellen, Verschwenkens des Deckels zwischen der ersten und zweiten Position, wobei die Gegenkrafteinrichtung vorzugsweise in Wirkverbindung mit der Antriebsvorrichtung steht.

4. Deckel nach Anspruch 2 oder 3, **dadurch gekennzeichnet, daß**
die Antriebsvorrichtung (25) zumindest eine Antriebseinheit (27) und ein, vorzugsweise die Drehachse (5') des Deckels (3') mit der Antriebseinheit (27) verbindendes, Übertragungselement umfaßt,
das Übertragungselement zumindest ein erstes Verbindungselement, vorzugsweise in Form eines Hubzylinders und/oder einer ersten Federeinrichtung, insbesondere einer Druckgasfeder (31) und/oder Schraubenfeder, umfaßt, und
der Deckel (3'), vorzugsweise gegen die Kraft des Verbindungselements, manuell ohne Betätigung der Antriebseinheit (27), insbesondere in die erste Position, verschwenkbar ist.

5. Deckel nach einem der vorangehenden Ansprüche, **dadurch gekennzeichnet, daß**
der Deckel (3, 3') in zumindest einer zwischen der ersten und zweiten Position liegenden Position, insbesondere in der dritten und/oder vierten Position, arretierbar ist, vorzugsweise mittels der Antriebsvorrichtung (25).

6. Deckel nach Anspruch 5, **dadurch gekennzeichnet, daß**
das Übertragungselement, insbesondere das erste Verbindungselement (31), zum Arretieren des Deckels (3') zumindest einen, insbesondere mechanischen, Anschlag aufweist.

7. Deckel nach einem der vorangehenden Ansprüche, **dadurch gekennzeichnet, daß**
die Hebe-/Senkvorrichtung zumindest eine mit dem zweiten Garbehälter in Wirkverbindung stehende Tragevorrichtung, vorzugsweise in Form eines Gestänges (15), umfaßt,
die Tragevorrichtung lösbar mit zumindest einem zweiten Verbindungselement, vorzugsweise in Form eines am Deckel (3) angeordneten Hakens (13), verbindbar ist, und
die Verbindung zwischen dem Deckel (3) und dem zweiten Garbehälter (11), insbesondere bei einem Verschwenken des Deckels (3) in die erste Position, vorzugsweise automatisch, lösbar ist.

8. Deckel nach Anspruch 7, **dadurch gekennzeichnet, daß**
das Gestänge (15) bei bzw. nach einem Lösen der Verbindung zwischen dem Deckel (3) und dem zweiten Garbehälter (11) relativ zum Deckel (3), vorzugsweise mittels einer Rollvorrichtung (21), bewegbar ist.

9. Deckel nach Anspruch 7 oder 8, **gekennzeichnet durch**
zumindest eine zweite Federeinrichtung in Wirkverbindung mit dem zweiten Garbehälter (11) und der Tragevorrichtung, insbesondere zur Erleichterung des Verschwenkens aus der ersten Position heraus und/oder zum Auslenken des Gestänges (15).

10. Deckel nach einem der vorangehenden Ansprüche, **gekennzeichnet durch**
zumindest eine Sicherheitsvorrichtung, über die der Deckel bei der Durchführung eines Druckgarprozeßes innerhalb des ersten Garbehälters erst nach Ablassen des Drucks aus dem ersten Garbehälter aus der ersten Position heraus verschwenkbar ist.

11. Deckel nach einem der vorangehenden Ansprüche, **gekennzeichnet durch**
zumindest einen Sensor, insbesondere in Form eines Gewichtssensors, Rauchsensors, Drucksensors, Tempartursensors und/oder Positionssensors.

12. Deckel nach einem der vorangehenden Ansprüche, **gekennzeichnet durch** eine Ein- und/oder Ausgabeeinheit, insbesondere umfassend zumindest einen Schalter, eine Anzeige, einen Lautsprecher und/oder ein Mikrophon.

13. Deckel nach einem der vorangehenden Ansprüche, **gekennzeichnet durch**
zumindest eine Steuer- und/oder Regeleinrichtung in Verbindung mit der Schwenkvorrichtung, der Hebe-/Senkvorrichtung, der Antriebsvorrichtung (25), der Antriebseinheit (27), der Gegenkrafteinrichtung, dem Übertragungselement, dem Anschlag, der Tragevorrichtung (15), dem ersten und/oder zweiten Verbindungselement (31, 13), der Sicherheitsvorrichtung, der ersten und/oder zweiten Federeinrichtung, der Rollvorrichtung (21), dem Sensor und/oder der Ein- und/oder Ausgabeeinheit.

14. Verfahren zum Betreiben eines Gargeräts, umfassend zumindest einen Deckel, insbesondere nach einem der vorangehenden Ansprüche, und einen zumindest teilweise mit dem Deckel verschließbaren ersten Garbehälter, insbesondere in Form eines Tiegels oder Bottichs, wobei der Deckel über eine Schwenkvorrichtung um eine im wesentlichen horizontal verlaufenden Drehachse relativ zum Gargerät zum Öffnen bzw. Verschließen des ersten Garbehälters in zumindest eine erste Position, in welcher der erste Garbehälter, insbesondere druckdicht, verschlossen wird, und eine zweite Position, in welcher der erste Garbehälter zugänglich wird, verschwenkt wird, **dadurch gekennzeichnet, daß** zumindest ein zweiter Garbehälter, insbesondere in Form eines Garkorbs, mittels einer vom Deckel umfaßten Hebe-/Senkvorrichtung in den ersten Garbehälter hinein- bzw. aus diesem herausbewegt wird, wobei der zweite Garbehälter durch Verschwenken des Dekkels aus zumindest einer dritten Position, in welcher der zweite Garbehälter zumindest teilweise oberhalb und außerhalb des ersten Garbehälters und/oder eines im ersten Garbehälter eingefüllten Garmediums positionert wird, in zumindest eine vierte Position, in welcher der zweite Garbehälter im wesentlichen in dem ersten Garbehälter und/oder dem Garmedium positioniert wird.

15. Verfahren nach Anspruch 14, **dadurch gekennzeichnet, daß**
der Deckel mittels einer Antriebsvorrichtung, vorzugsweise automatisch, zumindest zwischen der dritten und vierten Position verschwenkt wird.

16. Verfahren nach Anspruch 14 oder 15, **dadurch gekennzeichnet, daß**
der Deckel zumindest in die erste Position manuell verschwenkt wird.

17. Verfahren nach einem der Ansprüche 14 bis 16, **dadurch gekennzeichnet, daß**
die Verbindung zwischen dem Deckel und dem zweiten Garbehälter gelöst werden kann, insbesondere beim Verschwenken in die erste Position.

18. Verfahren nach einem der Ansprüche 14 bis 17, **dadurch gekennzeichnet, daß**
der Deckel gesteuert und/oder geregelt bewegt wird in Abhängigkeit von dem Garmedium im ersten Garbehälter, einem Gargut im zweiten Garbehälter, einem Garverfahren und/oder einem Reinigungsverfahren.

19. Verfahren nach Anspruch 18, **dadurch gekennzeichnet, daß**
die Steuerung und/oder Regelung und/oder eine Diagnose über einen Datentransfer, insbesondere umfassend das Internet, durchgeführt wird.

20. Verfahren nach einem der Ansprüche 14 bis 19, **dadurch gekennzeichnet, daß**
der Deckel mit einem Benutzer kommuniziert über eine Ein- und/oder Ausgabeeinheit.

## Claims

1. A lid (3, 3') for a cooking appliance (1, 1') with at least one first cooking container, particularly in the form of a pan or tub (7, 7'), which is at least partially closable by the lid (3, 3'), and at least one pivoting device by means of which the lid (3, 3') is pivotable, particularly steplessly, about a substantially horizontal pivot axis (5, 5') relatively to the cooking appliance (1, 1') between at least one first position, which closes the first cooking container (7, 7') particularly so that it is pressure-tight, and at least one second position which opens the first cooking container (7, 7'), **characterised by** at least one lifting/lowering device (13, 15, 17, 19, 21, 23) for at least one second cooking container, particularly in the form of a cooking basket (11), by means of which the second cooking container (11) is liftable from or lowerable into the first cooking container (7), the lifting/lowering device (13, 15, 17, 19, 21, 23) being so operatively connected to the pivoting device that as a result of the pivoting of the lid (3) the second cooking container (11) is movable out of at least one third position in which the second cooking container (11) is disposed at least partially outside and above the first cooking container (7) and/or a cooking medium (9) introducible in the first cooking container (7), into at least one fourth position in which the second cooking container (11) is disposed substantially in the first cooking container (7) and/or the cooking medium (9).

2. A lid according to claim 1, **characterised by** at least one, particularly mechanical, electromechanical, hydraulic, electro-hydraulic, pneumatic and/or electro-pneumatic driving device (25) which is comprised preferably by the pivoting device and the lifting/lowering device.

3. A lid according to claim 1 or 2, **characterised by** at least one counteracting force device, particularly in the form of a coil spring, a spiral spring, and/or torsion spring and/or comprising at least one counterweight, in order to facilitate the, particularly manual, pivoting of the lid between the first and second positions, the counteracting force device preferably being operatively connected to the drive device.

4. A lid according to claim 2 or 3, **characterised in that** the drive device (25) comprises at least one drive unit (27) and a transmission element preferably connecting the pivot axis (5') of the lid (3') to the drive unit (27) , the transmission element comprises at least one first connecting element, preferably in the form of a reciprocating cylinder and/or a first spring device, particularly a compressed gas spring (31) and/or a coil spring, and the lid (3') is pivotable, particularly into the first position, preferably against the force of the connecting,element, manually without actuation of the drive unit (27).

5. A lid according to any one of the preceding claims, **characterised in that** the lid (3, 3') is lockable in at least one position situated between the first and second positions, particularly in the third and/or fourth position, preferably by means of the drive device (25).

6. A lid according to claim 5, **characterised in that** the transmission element, particularly the first connecting element (31), has at least one, particularly mechanical, stop in order to lock the lid (3').

7. A lid according to any one of the preceding claims, **characterised in that** the lifting/lowering device comprises at least one carrier device operatively connected to the second cooking container, preferably in the form of a linkage (15), the carrier device is releasably connectable to at least one second connecting element, preferably in the form of a hook (13) disposed on the lid (3), and the connection between the lid (3) and the second cooking container (11) is releasable, preferably automatically, particularly on pivoting of the lid (3) into the first position.

8. A lid according to claim 7, **characterised in that** the linkage (15) is movable relatively to the lid (3), preferably by means of a rolling device (21), on or after release of the connection between the lid (3) and the second cooking container (11).

9. A lid according to claim 7 or 8, **characterised by** at least one second spring device operatively connected to the second cooking container (11) and the carrier device, particularly to facilitate pivoting from the first position and/or for deflection of the linkage (15).

10. A lid according to any one of the preceding claims, **characterised by** at least one safety device by means of which during the performance of a pressurised cooking process inside the first cooking container the lid is pivotable out of the first position only after the pressure has been released from the first cooking container.

11. A lid according to any one of the preceding claims, **characterised by** at least one sensor, particularly in the form of a weight sensor, smoke sensor, pressure sensor, temperature sensor and/or position sensor.

12. A lid according to any one of the preceding claims, **characterised by** an inputting and/or outputting unit, particularly comprising at least one switch, a display, a loudspeaker and/or a microphone.

13. A lid according to any one of the preceding claims, **characterised by** at least one open and/or closed loop control device connected to the pivoting device, the lifting/lowering device, the drive device (25), the drive unit (27), the counteracting force device, the transmission element, the stop, the carrier device (15), the first and/or second connecting element (31, 13), the safety device, the first and/or second spring device, the rolling device (21), the sensor and/or the inputting and/or outputting unit.

14. A method of operating a cooking appliance comprising at least one lid, particularly in accordance with one of the preceding claims, and a first cooking container, particularly in the form of a pan or tub, at least partially closable with the lid, the lid being pivoted, via a pivoting device, about a substantially horizontal pivot axis relatively to the cooking appliance, for opening and closing the first cooking container, into at least one first position in which the first cooking container is closed, particularly so as to be pressure-tight, and a second position in which the first cooking container is'accessible, **characterised in that** at least one second cooking container, particularly in the form of a cooking basket, is moved into and out of the first cooking container by means of a lifting/lowering device comprised by the lid, the second cooking container being positioned, by pivoting of the lid from at least one third position in which the second cooking container is positioned at least partially above and outside the first cooking container and/or a cooking medium introduced in the first cooking container, into at least one fourth position in which the second cooking container is positioned substantially in the first cooking container and/or the cooking medium.

15. A method according to claim 14, **characterised in that** the lid is pivoted by a drive device, preferably automatically, at least between the third and fourth positions.

16. A method according to claim 14 or 15, **characterised in that** the lid is manually pivoted at least into the first position.

17. A method according to any one of claims 14 to 16, **characterised in that** the connection between the lid and the second cooking container can be released, particularly on pivoting into the first position.

18. A method according to any one of claims 14 to 17, **characterised in that** the lid is moved under open and/or closed loop control in dependence on the cooking medium in the first cooking container, a food for cooking in the second cooking container, a cooking process and/or a cleaning process.

19. A method according to claim 18, **characterised in that** the open and/or closed loop control and/or a diagnosis is carried out via a data transfer, particularly comprising the Internet.

20. A method according to any one of claims 14 to 19, **characterised in that** the lid communicates with a user via an inputting and/or outputting unit.

## Revendications

1. Couvercle (3, 3') pour un appareil de cuisson (1, 1'), comprenant au moins un premier récipient de cuisson, susceptible d'être fermé au moins partiellement par le couvercle (3, 3'), en particulier récipient de cuisson se présentant sous la forme d'un creuset ou d'une cuve (7, 7'), et au moins un dispositif de pivotement, par l'intermédiaire duquel le couvercle (3, 3') est susceptible de pivoter, en particulier de façon progressive continue, autour d'un axe de rotation (5, 5') s'étendant sensiblement horizontalement, par rapport à l'appareil de cuisson (1, 1'), le pivotement se faisant en au moins une première position, obturant, en particulier de façon étanche à la pression, le premier récipient de cuisson (7, 7'), et au moins une deuxième position, ouvrant le premier récipient de cuisson (7, 7'), **caractérisé par**
au moins un dispositif de levage/abaissement (13, 15, 17, 19, 21, 23) pour au moins un deuxième récipient de cuisson, en particulier se présentant sous la forme d'un panier de cuisson (11), dispositif par l'intermédiaire duquel le deuxième récipient de cuisson (11) est susceptible d'être levé du, ou abaissé dans le premier récipient de cuisson (7), sachant que le premier dispositif de levage/abaissement (13) est relié fonctionnellement au dispositif de pivotement, de manière que le deuxième récipient de cuisson (11) soit susceptible d'être déplacé par un pivotement du couvercle (3), au moins partiellement hors et au-dessus du premier récipient de cuisson (7) et/ou d'un fluide de cuisson (9) susceptible d'être introduit dans le premier récipient de cuisson (7), le déplacement aboutissant à àu moins une quatrième position, à laquelle le deuxième récipient de cuisson (11) est disposé sensiblement dans le premier récipient de cuisson (7) et/ou le fluide de cuisson (9).

2. Couvercle selon la revendication 1, **caractérisé par** au moins un dispositif d'entraînement (25), en particulier mécanique, électromécanique, hydraulique, électrohydraulique, pneumatique, et/ou électropneumatique, entouré, de préférence, par le dispositif de pivotement et le dispositif de levage/abaissement.

3. Couvercle selon la revendication 1 ou 2, **caractérisé par**
au moins un dispositif générateur de force antagoniste, se présentant en particulier sous la forme d'un ressort hélicoïdal, d'un ressort spiral et/ou d'un ressort de torsion, et/ou comprenant au moins un contrepoids, pour faciliter le pivotement, en particulier manuel, du couvercle entre la première et la deuxième position, le dispositif générateur de force antagoniste étant, de préférence, relié fonctionnellement au dispositif d'entraînement.

4. Couvercle selon la revendication 2 ou 3, **caractérisé en ce que**
le dispositif d'entraînement (25) comprend au moins une unité d'entraînement (27) et un élément de transmission reliant, de préférence, l'axe de rotation (5') du couvercle (3') à l'unité d'entraînement (27),
l'élément de transmission comprend au moins un premier élément de liaison, de préférence ayant la forme d'un vérin, et/ou d'un premier dispositif formant ressort, en particulier un ressort à gaz comprimé (31) et/ou un ressort hélicoidal, et
le couvercle (3') étant susceptible de pivoter, de préférence à l'encontre de la force d'élément de liaison, manuellement, sans actionnement de l'unité d'entraînement (27), le pivotement se faisant en particulier à la première position.

5. Couvercle selon l'une des revendications précédentes,
**caractérisé en ce que**
le couvercle (3, 3') est susceptible d'être bloqué en au moins une position située entre la première et la deuxième position, en particulier à la troisième et/ou à la quatrième position, de préférence au moyen du dispositif d'entraînement (25).

6. Couvercle selon la revendication 5, **caractérisé en ce que**
l'élément de transmission, en particulier le premier élément de liaison (31), présente au moins une butée, en particulier mécanique, pour le blocage du couvercle (3').

7. Couvercle selon l'une des revendications précédentes,
**caractérisé en ce que**
le dispositif de levage/abaissement comprend au moins un dispositif porteur, relié fonctionnellement au deuxième récipient de cuisson, dispositif porteur réalisé, de préférence, sous la forme d'une tringlerie (15), le dispositif porteur étant susceptible d'être relié de façon désolidarisable à au moins un deuxième élément de liaison, de préférence ayant la forme d'un crochet (13) disposé sur le couvercle (3), et la liaison entre le couvercle (3) et le deuxième récipient de cuisson (11) étant désolidarisables, de préférence automatiquement, en particulier en cas d'un pivotement du couvercle (1) à la première position.

8. Couvercle selon la revendication 7, **caractérisé en ce que**
la tringlerie (15) est déplaçable, de préférence au moyen d'un dispositif à roulement (21), au moment ou après une désolidarisation de la liaison entre le couvercle (3) et le deuxième récipient de cuisson (11) par rapport au couvercle (3).

9. Couvercle selon la revendication 7 ou 8, **caractérisé par**
au moins un deuxième dispositif formant ressort, relié fonctionnellement au deuxième récipient de cuisson (11) et au dispositif porteur, en particulier pour faciliter le pivotement depuis la première position et pour obtenir la manoeuvre de la tringlerie (15).

10. Couvercle selon l'une des revendications précédentes,
**caractérisé par**
au moins un dispositif de sécurité, par l'intermédiaire duquel, lors de l'exécution d'un processus de cuisson sous pression se faisant à l'intérieur du premier récipient de cuisson, le couvercle est susceptible d'être pivoté hors de la première position, ensuite, après annulation par échappement de la pression depuis le premier récipient de cuisson.

11. Couvercle selon l'une des revendications précédentes,
**caractérisé par**
au moins un capteur, en particulier réalisé sous la forme d'un capteur de poids, d'un capteur de fumée, d'un capteur de pression, d'un capteur de température et/ou d'un capteur de position.

12. Couvercle selon l'une des revendications précédentes,
**caractérisé par**
une unité d'introduction et/ou d'édition, en particulier comprenant au moins un interrupteur, un affichage, un haut-parleur et/ou un microphone.

13. Couvercle selon l'une des revendications précédentes,
**caractérisé par**
au moins un dispositif de commande et/ou de régulation, en liaison avec le dispositif de pivotement, le dispositif de levage/abaissement, le dispositif d'entraînement (25), l'unité d'entraînement (27), le dispositif générateur de force antagoniste, l'élément de transmission, la butée, le dispositif porteur (15), le premier et/ou le deuxième élément de liaison (31, 13), le dispositif de sécurité, le premier et/ou le deuxième dispositif formant ressort, le dispositif de roulement (21), le capteur et/ou l'unité d'introduction et/ou d'édition.

14. Procédé de fonctionnement d'un appareil de cuisson, comprenant au moins un couvercle, en particulier selon l'une des revendications précédentes, et un premier récipient de cuisson, susceptible d'être pivoté au moins partiellement avec le couvercle, récipient de cuisson réalisé en particulier sous la forme d'un creuset ou d'une cuve, le couvercle étant pivoté par l'intermédiaire d'un dispositif de pivotement, par une manoeuvre se faisant autour d'un axe de rotation s'étendant sensiblement horizontalement, par rapport à l'appareil de cuisson, pour ouvrir ou .fermer le premier récipient de cuisson, pivotement effectué en au moins une première position à laquelle le premier récipient de cuisson est fermé, en particulier de façon étanche à la pression, et une deuxième position à laquelle le premier récipient de cuisson est accessible, **caractérisé en ce qu'**
au moins un deuxième récipient de cuisson, en particulier réalisé sous la forme d'un panier de cuisson, est introduit dans le, respectivement sorti du, premier récipient de cuisson, au moyen d'un dispositif de levage/abaissement entouré par le couvercle, sachant que le deuxième récipient de cuisson est manoeuvré par un pivotement du couvercle, depuis au moins une troisième position, à laquelle le deuxième récipient de cuisson est positionné au moins partiellement au-dessus et à l'extérieur du premier récipient de cuisson et/ou d'un fluide sous pression introduit dans le premier récipient de cuisson, et positionné en au moins une quatrième position, à laquelle le deuxième récipient de cuisson est positionné sensiblement dans le premier récipient de cuisson et/ou le fluide de cuisson.

15. Procédé selon la revendication 14, **caractérisé en ce que**
le couvercle est pivoté au moins entre la troisième et la quatrième position, au moyen d'un dispositif d'entraînement, de préférence de façon automatique.

16. Procédé selon la revendication 14 ou 15, **caractérisé en ce que**
le couvercle est pivoté manuellement au moins à la première position.

17. Procédé selon l'une des revendications 14 à 16, **caractérisé en ce que**
la liaison entre le couvercle et le deuxième appareil de cuisson peut être désolidarisée, en particulier lors du pivotement en la première position.

18. Procédé selon l'une des revendications 14 à 16, **caractérisé en ce que**
le couvercle est déplacé de façon commandée et/ou régulée, en fonction du fluide de cuisson présent dans le premier récipient de cuisson, d'un récipient de cuisson présent dans le deuxième récipient de cuisson, d'un procédé de cuisson et/ou d'un procédé de nettoyage.

19. Procédé selon la revendication 18, **caractérisé en ce que**
la commande et/ou la régulation et/ou un diagnostic est effectué et/sont effectués par un transfert de données, en particulier impliquant l'Internet.

20. Procédé selon l'une des revendications 14 à 19, **caractérisé en ce que**
le couvercle communique avec l'utilisateur, par l'intermédiaire d'une unité d'introduction et/ou d'édition.
